# EUROPÄISCHE PATENTSCHRIFT

(11) **EP 1 770 286 B1**
(45) Veröffentlichungstag und Bekanntmachung des Hinweises auf die Patenterteilung: **09.06.2010**
(21) Anmeldenummer: 06018626.9
(22) Anmeldetag: 06.09.2006
(51) Int. Cl.: F16C 3/10, F02B 75/24, F16C 3/08

(54) **Kurbelwelle für einen Boxermotor**
Crankshaft for a boxer engine
Vilebrequin pour un moteur à cylindres opposés

(30) Priorität: 29.09.2005 DE 102005046500
(43) Veröffentlichungstag der Anmeldung: 04.04.2007
(73) Patentinhaber: Bayerische Motoren Werke Aktiengesellschaft, 80809 München (DE)
(72) Erfinder: Platz, Christoph, 80797 München (DE); Hege, Heinz, 80807 München (DE)

(56) Entgegenhaltungen:
- DE-A1- 1 815 037
- DE-A1- 3 738 808
- DE-C- 959 773
- FR-A- 718 359
- GB-A- 259 065

## Beschreibung

Die vorliegende Erfindung betrifft eine Kurbelwelle für einen Boxermotor mit Kurbelwellengehäuselagerungen und Pleuellagerungen, wobei jede Pleuellagerung eine axiale Anlauffläche aufweist. Des weiteren betrifft die vorliegende Erfindung einen Boxermotor aufweisend die erfindungsgemäße Kurbelwelle.

Kurbelwellen für Boxermotoren sind aus dem Stand der Technik beispielsweise der DE 35 21 667, der DE 10 2004 035 025 A1, der EP 1 207 292sowie der gattungsbildenden DE 3738808 A1 bekannt. Die dort beschriebenen Kurbelwellen haben jedoch den Nachteil, dass sie einen vergleichsweise großen Kolbenversatz aufweisen; d. h. dass der axiale Versatz zwischen den beiden Kolben vergleichsweise groß ist. Dadurch erhöht sich die Baulänge und das Gewicht der Kurbelwelle bzw. des Kurbelwellengehäuses und damit des gesamten Motors. Darüber hinaus treten größere auszugleichende Kräfte bzw. Momente auf.

Es war deshalb die Aufgabe der vorliegenden Erfindung, eine Kurbelwelle zur Verfügung zustellen, die die Nachteile des Standes der Technik nicht aufweist.

Gelöst wird die Aufgabe mit einer Kurbelwelle mit den Merkmalen des Anspruchs 1.

Bei der erfindungsgemäßen Kurbelwelle ist es demnach möglich, die Radienauslaufflächen, die sich an die Lagerflächen der Pleuele anschließen, näher an der Mittellagerfläche anzuordnen. Dadurch befindet sich die Radienauslauffläche jedoch hinter der Mittellagerseitenfläche und kann dem Pleuel somit nicht mehr als Anlauffläche dienen. Diese Anlauffläche wird deshalb nach dem Bearbeiten der Lagerfläche und der Radienauslauffläche der Pleuellagerung nachträglich als separates Bauteil an der Kurbelwelle angeordnet.

Durch die erfindungsgemäße Kurbelwelle ist es möglich, den axialen Versatz der Zylinder zu verkleinern. Dadurch verringert sich die Baulänge und das Gewicht der Kurbelwelle, des Kurbelgehäuses sowie des gesamten Motors. Die auszugleichenden Kräfte bzw. Momente sind bei der erfindungsgemäßen Kurbelwelle geringer als bei Kurbelwellen gemäß dem Stand der Technik. Dadurch verringert sich beispielsweise die Größe der Ausgleichsgewichte, die zur Erzielung der gewünschten Laufruhe des Motors benötigt werden.

Erfindungsgemäß ist ein die axiale Anlauffläche aufweisendes, separates Bauteil an der Kurbelwelle angeordnet. Das Bauteil ist im Bereich der Mittelwange der Kurbelwelle angeordnet und weistzwei Anlaufflächen für zwei Pleuel auf.

Vorzugsweise ist das Bauteil in die Kurbelwelle eingesetzt und/oder auf die Kurbelwelle aufgesetzt. Besonders bevorzugt besteht zwischen dem die Anlauffläche aufweisenden Bauteil und der Kurbelwelle eine Form-, Kraft- und/oder formschlüssige Verbindung. Beispielsweise kann das die Anlauffläche aufweisende Bauteil in die Kurbelwelle eingesteckt, eingepresst, eingeschraubt und/oder eingeklebt sein. Das Bauteil kann jedoch auch beispielsweise als Ring lediglich auf die Kurbelwelle aufgesetzt sein.

Das die Anlauffläche(n) aufweisende Bauteil kann jedes beliebige dem Fachmann geläufige Bauteil sein. Vorzugsweise handelt es sich bei dem Bauteil jedoch um eine Hülse oder um einen oder mehrere Zapfen, die jeweils in eine Bohrung in der Kurbelwelle eingesetzt werden.

Vorzugsweise erfolgt die Anordnung des Bauteils, das die Anlauffläche aufweist, an der Kurbelwelle, nachdem die Lagerflächen und die Radienauslaufflächen der Pleuellagerung bearbeitet, insbesondere geschliffen worden sind. Diese bevorzugte Ausführungsform der vorliegenden Erfindung hat den Vorteil, dass die Lagerflächen und insbesondere die Radienauslaufflächen ungehindert bearbeitet werden können. Dadurch lassen sich insbesondere im Bereich der Radienauslaufflächen sehr glatte Flächen mit geringen Toleranzen erzielen, was insbesondere für die Langlebigkeit der Kurbelwelle von großer Bedeutung ist, da ein Versagen der Kurbelwelle in der Regel im Bereich der Radienauslaufflächen erfolgt.

Die erfindungsgemäße Kurbelwelle eignet sich insbesondere zum Einsatz in Boxermotoren.

Ein weiterer Gegenstand der vorliegenden Erfindung ist deshalb ein Boxermotor aufweisend die erfindungsgemäße Kurbelwelle.

Vorzugsweise handelt es sich bei dem Boxermotor um einen Zweizylindermotor.

Im folgenden wird die Erfindung anhand der Figuren 1 bis 4 erläutert. Diese Erläuterungen sind lediglich beispielhaft und schränken den allgemeinen Erfindungsgedanken nicht ein. Die Erläuterungen gelten für beide Erfindungsgegenstände gleichermaßen.
- **Figur 1**: zeigt eine Ausführungsform der erfindungsgemäßen Kurbelwelle.
- **Figur 2**: zeigt ein Detail der Kurbelwelle gemäß Figur 1.
- **Figur 3**: zeigt die erfindungsgemäße Kurbelwelle mit einem Pleuel.
- **Figur 4**: zeigt eine weitere Ausführungsform des Mittellagers gemäß Figur 1.

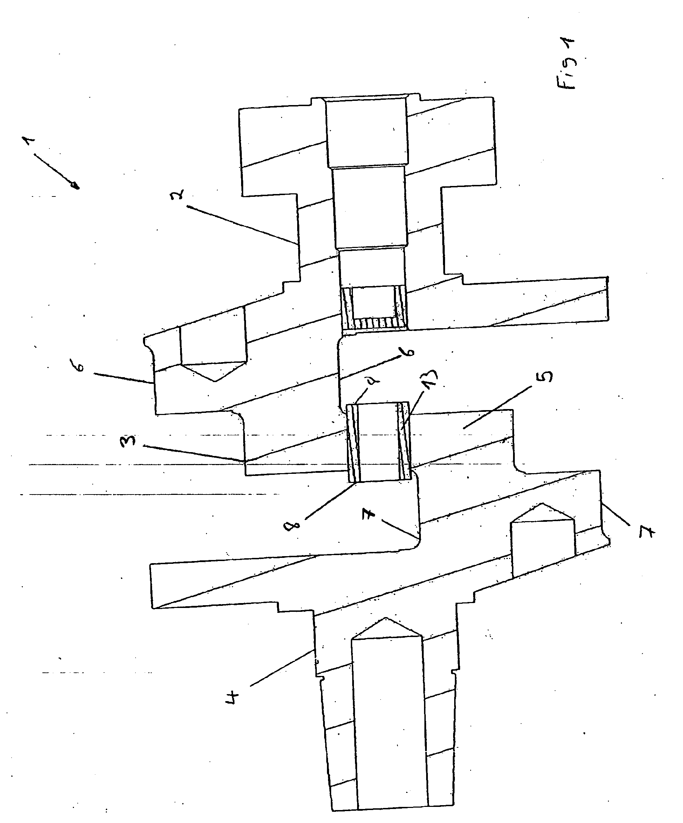

Figur 1 zeigt die erfindungsgemäße Kurbelwelle 1 für einen zweizylindrigen Boxermotor. Die Kurbelwelle weist zwei äußere Kurbelwellengehäuselagerungen 2, 4 und eine Lagerung 3, das s. g. Mittelkurbelwellengehäuselager, auf. Des weiteren weist die erfindungsgemäße Lagerung zwei Pleuellagerungen 6, 7 auf, an denen die Pleuele (nicht dargestellt) gelagert sind. Im Bereich des Mittellagers 3 befindet sich die Mittelwange 5, die eine Bohrung aufweist, in die eine Hülse 13 eingesetzt, beispielsweise eingepresst, eingeschraubt oder eingeklebt, ist, deren Enden jeweils die Anlaufflächen 8 für die nicht dargestellten Pleuele zur Verfügung stellen.

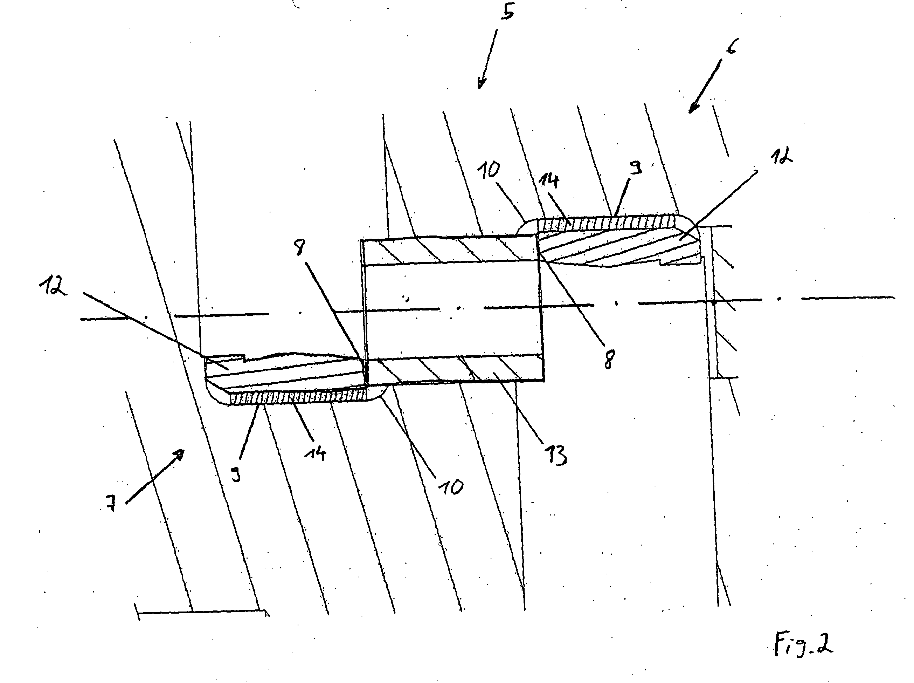

In Figur 2 ist der Bereich um die Mittelwange 5 detailliert dargestellt. In dieser Figur ist zu erkennen, dass die Pleuellagerungen 6, 7 jeweils Lagerflächen 9 aufweisen, die mit Lagern 14, die an den Pleuelfüßen 12 angeordnet sind, drehend zusammenwirken. An die Lagerflächen 9 schließen sich Radienausläufe 10 an, die so gestaltet sind, dass sie so nah wie möglich neben der Mittellagerfläche liegen. Dadurch befinden sich diese Radienauslaufflächen jedoch hinter der Mittellagergehäuseseitenflächen und können dem jeweiligen Pleuelfuß 12 nicht mehr als Anlauffläche dienen. Um dennoch eine Anlauffläche für den Pleuelfuß zur Verfügung stellen zu können, wird nach der Bearbeitung der Lagerfläche 9 sowie der Radienauslauffläche 10, beispielsweise durch Schleifen, die Hülse 13, die für beide Pleuellagerungen die Anlaufflächen 8 aufweist in eine Bohrung in der Kurbelwelle angeordnet, beispielsweise eingepresst.

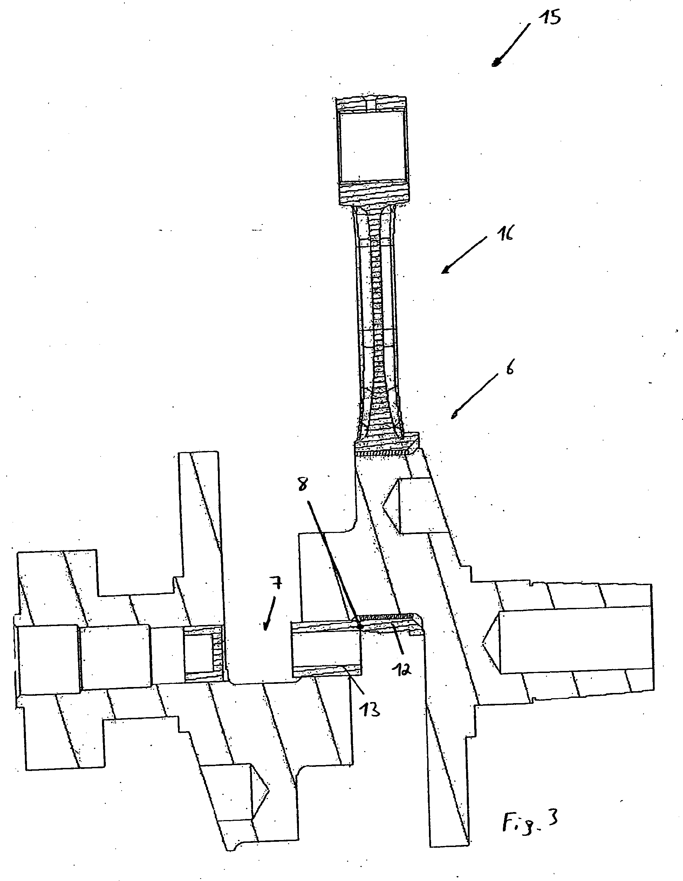

In Figur 3 ist die Kurbelwelle gemäß den Figuren 1 und 2 zusehen, wobei in dem vorliegenden Fall nicht nur der Pleuelfuß 12, sondern auch der gesamte Pleuel 16 sowie der dazugehörige Kolben 15 zu sehen ist. Der Fachmann versteht, dass bei einem fertig montierten Motor an der Pleuellagerung 7 ebenfalls ein Pleuel 16 und ein dazugehöriger Zylinder 15 angeordnet ist.

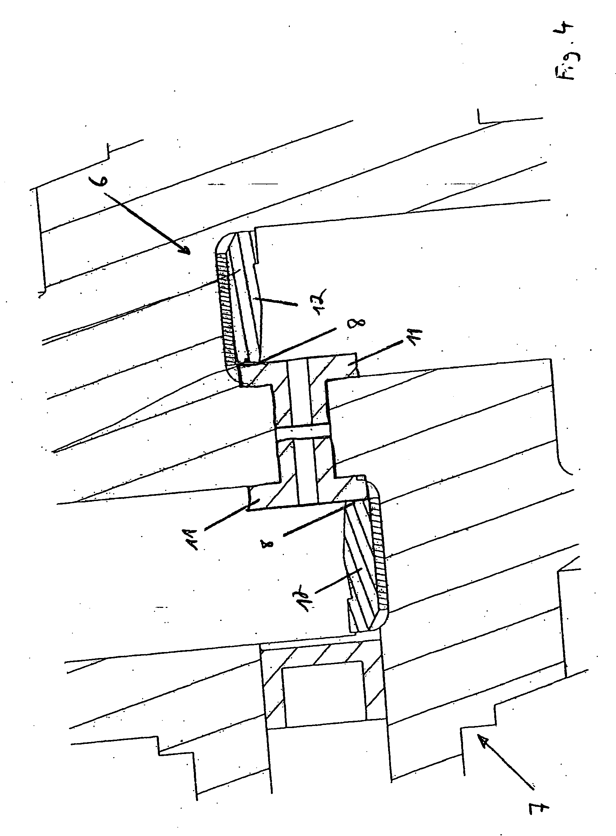

Figur 4 zeigt eine weitere Ausführungsform des Bauteils, das eine Anlauffläche 8 für einen Pleulfuß 12 aufweist. In dem vorliegenden Fall sind diese Bauteile Zapfen 11, die in einer Bohrung innerhalb der Kurbelwelle angeordnet sind. An ihren Enden weisen die Zapfen 11 jeweils die Anlaufflächen 8 auf, die das axiale Spiel des Pleuelfußes 12 begrenzen.

### Bezugszeichenliste:

- 1: Kurbelwelle
- 2, 3, 4: Kurbelwellengehäuselager
- 5: Mittelwange
- 6, 7: Pleuellagerung
- 8: Anlauffläche
- 9: Lagerfläche
- 10: Radienauslauffläche
- 11: Bauteil, Zapfen
- 12: Pleuelfuß
- 13: Bauteil, Hülse
- 14: Lagerfläche des Pleuels 16
- 15: Kolben
- 16: Pleuel

## Patentansprüche

1. Kurbelwelle (1) für einen gegenüberliegende, in Kurbelwellenachsrichtung benachbarte Zylinder umfassenden Boxmotor mit diesen Zylindern zugeordneten Pleuellagerungen (6, 7) und einer zwischen diesen angeordneten Kurbelwellengehäuselagerung (3) mit Mittelwange (5), wobei die Pleuellagerungen (6, 7) jeweils eine zur Mittelwange (5) gerichtete axiale Anlauffläche (8) aufweisen, **dadurch gekennzeichnet, dass** die axialen Anlaufflächen (8) mittels eines separaten Bauteils (11, 13) gebildet sind, das in der Mittelwange (5) angeordnet ist, wobei die axialen Anlaufflächen (8) in Kurbelwellenachsrichtung über die Mittelwangenseitenflächen (5) hinausragen.

2. Kurbelwelle nach einem der voranstehenden Ansprüche, **dadurch gekennzeichnet, dass** das Bauteil (11, 13) in die Kurbelwelle (1) eingesetzt und/oder auf die Kurbelwelle aufgesetzt ist.

3. Kurbelwelle nach einem der voranstehenden Ansprüche, **dadurch gekennzeichnet, dass** zwischen dem die Anlauffläche (8) aufweisenden Bauteil (11, 13) und der Kurbelwelle (1) eine form-, kraft- und/oder formschlüssige Verbindung besteht.

4. Kurbelwelle nach einem der voranstehenden Ansprüche, **dadurch gekennzeichnet, dass** die Anlauffläche (8) Teil einer Hülse (13) oder eines Zapfens (11) ist.

5. Kurbelwelle nach einem der voranstehenden Ansprüche, **dadurch gekennzeichnet, dass** die Pleuellagerung (6, 7) jeweils eine Lagerfläche (9) und eine Radienauslauffläche (10) aufweist und dass das Bauteil (11, 13) nach dem Bearbeiten der Lagerfläche (9) und der Radienauslauffläche (10) montiert ist.

6. Boxermotor aufweisend eine Kurbelwelle nach einem der voranstehenden Ansprüche.

7. Boxermotor nach Anspruch 6, **dadurch gekennzeichnet, dass** es ein 2-Zylinder-Motor ist.

## Claims

1. A crankshaft (1) for a boxer engine comprising opposed cylinders adjacent in the axial direction of the crankshaft, with connecting rod bearings (6, 7) associated with these cylinders and a crankshaft housing bearing (3) arranged between them with a central web (5), wherein the connecting rod bearings (6, 7) in each case have an axial thrust face (8) directed toward the central web (5), **characterised in that** the axial thrust faces (8) are formed by means of a separate component (11, 13) which is arranged in the central web (5), the axial thrust faces (8) projecting in the axial direction of the crankshaft over the central web side faces (5).

2. A crankshaft according to any one of the preceding claims, **characterised in that** the component (11, 13) is inserted in the crankshaft (1) and/or is placed on the crankshaft.

3. A crankshaft according to any one of the preceding claims, **characterised in that** a positive, non-positive and/or interlocking connection exists between the component (11, 13) having the thrust face (8) and the crankshaft (1).

4. A crankshaft according to any one of the preceding claims, **characterised in that** the thrust face (8) is part of a sleeve (13) or a journal (11).

5. A crankshaft according to any one of the preceding claims, **characterised in that** the connecting rod bearing (6, 7) in each case has a bearing face (9) and a radius run-out face (10) and **in that** the component (11, 13) is mounted after the machining of the bearing face (9) and the radius run-out face (10).

6. A boxer engine having a crankshaft according to any one of the preceding claims.

7. A boxer engine according to claim 6, **characterised in that** it is a two-cylinder engine.

## Revendications

1. Vilebrequin (1) pour un moteur à cylindres opposés comportant des cylindres voisins dans la direction de l'axe du vilebrequin et des paliers de bielles (6, 7) associés aux cylindres et un flanc intermédiaire (5) entre ce palier de carter de vilebrequin (3),
les paliers de bielles (6, 7) ayant une surface d'appui axial (8) respective, dirigée vers le flanc intermédiaire (5),
**caractérisé en ce que**
les surfaces d'appui axial (8), sont constituées par un composant séparé (11, 13) installé dans le flanc intermédiaire (5), et
les surfaces d'appui axial (8), dépassent des côtés du flanc intermédiaire (5) dans la direction de l'axe du vilebrequin.

2. Vilebrequin selon la revendication 1,
**caractérisé en ce que**
la pièce (11, 13) est placée dans le vilebrequin (1) et/ou est rapportée sur le vilebrequin.

3. Vilebrequin selon l'une des revendications précédentes,
**caractérisé par**
une liaison par la forme, par la force et/ou par la forme, entre la pièce (11, 13) comportant la surface d'appui (8) et le vilebrequin (1).

4. Vilebrequin selon l'une des revendications précédentes,
**caractérisé en ce que**
la surface d'appui (8) fait partie d'un manchon (13) ou d'un bouchon (11).

5. Vilebrequin selon l'une des revendications précédentes,
**caractérisé en ce que**
les paliers de bielles (6, 7) ont chacun une surface de palier (9) et une surface de congé radial (10), et
la pièce (11, 13) est installée après usinage de la surface de palier (9) et de la surface de congé radial (10).

6. Moteur à cylindres opposés comportant un vilebrequin selon l'une des revendications précédentes.

7. Moteur à cylindres opposés selon la revendication 6,
**caractérisé en ce qu'**
il s'agit d'un moteur à deux cylindres.
